# FASCICULE DE BREVET EUROPEEN

(11) **EP 2 111 333 B1**
(45) Date de publication et mention de la délivrance du brevet: **18.04.2012**
(21) Numéro de dépôt: 08762098.5
(22) Date de dépôt: 14.02.2008
(51) Int. Cl.: B29C 65/64

(54) **PROCEDE DE SOLIDARISATION DE PREMIERE ET SECONDE PIECES EN MATIERE THERMOPLASTIQUE**
VERFAHREN ZUR FIXIERUNG ERSTER UND ZWEITER THERMOPLASTISCHER TEILE
METHOD OF FASTENING FIRST AND SECOND THERMOPLASTIC PARTS

(30) Priorité: 15.02.2007 FR 0753290
(43) Date de publication de la demande: 28.10.2009
(73) Titulaire: Compagnie Plastic Omnium, 69007 Lyon (FR)
(72) Inventeur: TRESSE, David, F-70210 Polaincourt (FR); VERWAERDE, Marc, F-38460 Moras (FR)
(74) Mandataire: Remy, Vincent Noel Paul
(86) Numéro de dépôt international: PCT/FR2008/050250
(87) Numéro de publication internationale: WO 2008/104718

(56) Documents cités:
- DE-A1-102004 046 516
- GB-A- 2 173 139
- JP-A- 61 084 227

## Description

La présente invention concerne le domaine technique de la fixation de pièces en matière thermoplastique, notamment de pièces de véhicule automobile.

On connaît dans l'état de la technique une peau de pare-chocs de véhicule automobile sur laquelle sont rapportés et solidarisés différents éléments tels qu'un renfort ou un support de capteur. Une méthode connue de solidarisation de ces différents éléments est le bouterollage.

Les documents JP 610 84 227 et DE 10 2004 046516 décrivent des procédés de bouterollage de pièces en plastique.

Par exemple, pour solidariser un renfort sur une peau de pare-chocs, on munit la peau de pare-chocs d'une protubérance en saillie de sa face cachée, et on ménage une lumière dans le renfort. Puis, on met en contact le renfort contre la face de la peau de pare-chocs dont fait saillie la protubérance de manière à ce que la protubérance pénètre dans la lumière en faisant dépasser une portion d'extrémité. Ensuite, on chauffe intégralement la portion d'extrémité de la protubérance, par exemple au moyen d'ultrasons générés par une sonotrode, et on forme une tête de rivet en écrasant la protubérance verticalement.

Ce procédé de solidarisation connu impose généralement de chauffer la protubérance selon sa hauteur. En effet, le chauffage et l'écrasement de la protubérance sont souvent réalisés par le même outil qui, lors du chauffage, se trouve à proximité de l'extrémité supérieure de la nervure, de manière à limiter ses mouvements lors de l'écrasement. La durée de chauffage est relativement longue pour que la chaleur se propage sur toute la hauteur de la protubérance et pour que la matière de la protubérance soit totalement fondue.

En outre, en orientant le flux de chaleur selon la direction verticale de la protubérance, on risque de chauffer la face de l'élément de carrosserie dont fait saillie la protubérance, ce qui peut causer des défauts d'aspect de cette pièce de carrosserie.

Enfin, en écrasant la protubérance en direction de la base de la protubérance, c'est-à-dire perpendiculairement à l'élément de carrosserie, on risque de venir presser la surface de cet élément et de causer ainsi des défauts d'aspect.

L'invention a pour but de fournir un procédé de solidarisation qui ne présente pas ces inconvénients.

A cet effet, l'invention a pour objet un procédé de solidarisation de première et seconde pièces en matière thermoplastique de véhicule automobile, dans lequel la première pièce comprenant une protubérance en saillie d'une face et la seconde pièce comprenant une surface de prise, le procédé comprend les étapes suivantes :
- mise en contact de la seconde pièce contre ladite face de la première pièce, la seconde pièce étant agencée de manière à ce que l'angle entre un vecteur normal à la face de la première pièce et un vecteur normal à la surface de prise est aigu et à ce que la surface de prise est proche de la protubérance,
- chauffage de la protubérance,
- déformation plastique de la protubérance vers la seconde pièce par action d'un moyen de déformation se déplaçant sensiblement parallèlement à la face de la première pièce, de manière à ce qu'au moins une portion d'extrémité de la protubérance soit en contact avec la surface de prise.

De préférence, lors de l'étape de mise en contact, la seconde pièce est en butée contre la protubérance ce qui présente l'avantage de guider le positionnement des deux pièces l'une par rapport à l'autre.

Le fait que l'angle entre les vecteurs normaux aux deux surfaces soit aigu signifie que les deux surfaces sont sensiblement orientées dans la même direction. Lorsque l'angle est nul, les deux surfaces sont sensiblement parallèles.

L'étape de chauffage de la protubérance est relativement courte puisque le but de cette étape est uniquement de ramollir suffisamment la protubérance pour qu'elle puisse être déformée plastiquement vers la seconde pièce par le moyen de déformation. En outre, seule la base de la protubérance a besoin d'être ramollie pour permettre la déformation plastique de la protubérance. Dans la suite de la description, on parlera de pliage de la protubérance, bien qu'elle soit déformée plastiquement. Cette étape a une durée de l'ordre de 3 à 4 secondes, au plus de 6 secondes. Ce temps de chauffe est inférieur à celui nécessaire à la mise en oeuvre d'un procédé classique de bouterollage (environ 9 secondes). En effet, le bouterollage nécessite une fusion totale de la protubérance pour permettre de l'écraser verticalement.

En outre, grâce au fait que la protubérance est relativement peu chauffée, la durée de refroidissement est courte.

Etant donné que le temps de cycle du procédé de solidarisation est réduit, cela permet de robotiser cette opération de solidarisation et d'utiliser un unique robot capable d'effectuer successivement plusieurs points de solidarisation entre les deux pièces. Les appareils de soudure de l'état de la technique ont un temps de cycle long, ce qui oblige à effectuer plusieurs soudures simultanément et donc à concevoir des appareils complexes spécifiquement développés pour chaque pièce de carrosserie à assembler

Enfin, il est possible de chauffer la protubérance latéralement, ce qui permet, outre de réduire le temps de chauffe, de prévenir la formation de retassures à la surface de la première pièce.

Le procédé de solidarisation de l'invention peut en outre comprendre l'une ou plusieurs des caractéristiques suivantes.
- L'angle entre les deux vecteurs est sensiblement nul.
- Le procédé comprend une étape supplémentaire de pressage de la portion d'extrémité contre la seconde pièce, de façon à provoquer une fusion superficielle des parties de la portion d'extrémité et de la surface de prise en contact, et un mélange des matières fondues.
- La déformation plastique et le pressage de la portion d'extrémité contre la seconde pièce sont mis en oeuvre par le moyen de déformation. Le moyen de déformation se déplace dans un plan sensiblement parallèle à la face de la première pièce.
- Le moyen de déformation est manoeuvré par un robot.
- le moyen de déformation comprend un rouleau, un presseur, un patin ou un bloc de métal, manoeuvré par un robot..
- On chauffe simultanément la portion d'extrémité de la protubérance et la surface de prise, notamment au moyen d'un souffle d'air chaud, d'un laser, ou d'un rayonnement infrarouge
- La protubérance est une languette ou une nervure, la protubérance étant de préférence sensiblement normale à la face de la première pièce.
- La première pièce est une pièce de carrosserie et la seconde pièce est un renfort de la pièce de carrosserie ou un support de capteur.
- La seconde pièce comprenant un orifice traversant débouchant sur la surface de prise, lors de l'étape de mise en contact, la protubérance pénètre dans l'orifice en faisant dépasser la portion d'extrémité.

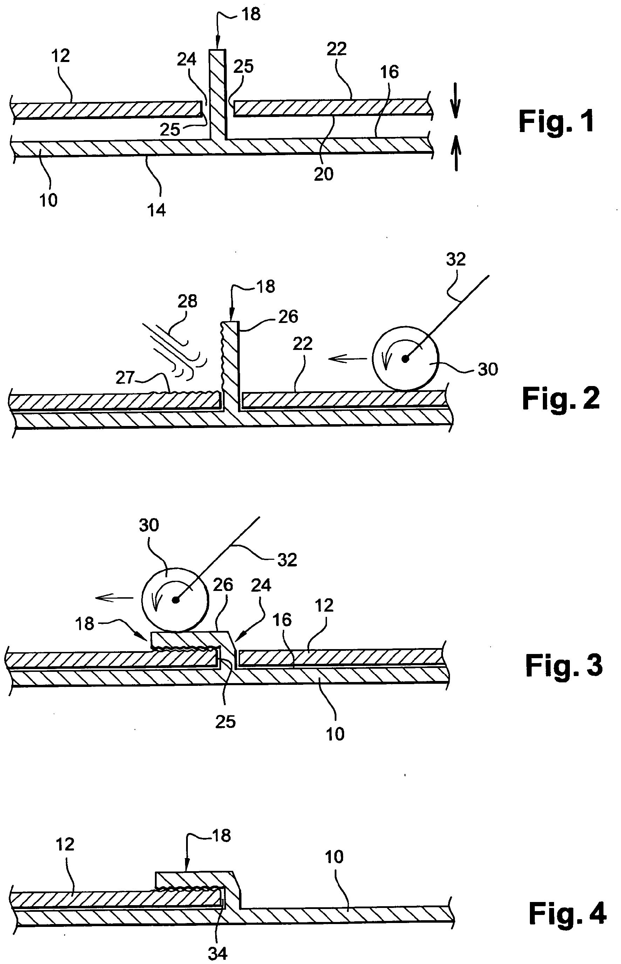

L'invention sera mieux comprise à la lecture de la description qui va suivre, donnée uniquement à titre d'exemple et faite en se référant aux dessins annexés dans lesquels les figures 1, 2 et 3 représentent trois étapes successives du procédé de solidarisation de l'invention et la figure 4 représente deux pièces solidarisées au moyen du procédé de l'invention selon une variante.

On considère des premières 10 et secondes 12 pièces en matière thermoplastique de véhicule automobile. Dans l'exemple représenté sur les figures, la première pièce 10 est une peau 10 de pare-chocs et la seconde pièce 12 est un renfort 12 de peau 10 de pare-chocs.

La peau 10 de pare-chocs comprend une face d'aspect 14 et une face opposée 16. La peau 10 de pare-chocs comprend une nervure 18 formant protubérance en saillie de la face opposée 16. La nervure 18 est venue de moulage avec la peau 10 et est sensiblement perpendiculaire à la surface 16 de la première pièce 10.

La pièce de renfort 12 comprend une surface de contact 20 et une surface opposée 22. La pièce 12 comprend en outre une lumière 24 traversant la pièce 12 de part en part, c'est-à-dire d'une surface 20 à l'autre 22. La lumière 24 est délimitée par un bord 25 de la surface de contact 20. Une partie 27 de la surface de contact forme une surface de prise.

Le procédé de solidarisation de l'invention consiste tout d'abord à mettre en contact la pièce de renfort 12 contre la pièce de carrosserie 10 de manière à ce que la nervure 18 pénètre dans la lumière 24 et à ce que la surface de contact 20 de la pièce de renfort 12 soit en contact avec la surface opposée 16 de la pièce de carrosserie 10. Cette étape est représentée sur la figure 1. Dans cette configuration, la protubérance 18 est alors proche du bord 25 de la lumière 24.

Lorsque les deux pièces sont en contact, une portion d'extrémité 26 de la nervure 18 dépasse hors de la lumière 24, comme représenté sur la figure 2. Pour que la portion d'extrémité 26 dépasse hors de la lumière 24, la hauteur de la nervure est supérieure à l'épaisseur de la pièce 12.

L'angle entre un vecteur normal à la face de la première pièce et un vecteur normal à la surface de prise 27 est aigu de préférence nul.

Au cours d'une étape suivante représentée sur la figure 2, la portion d'extrémité 26 ainsi que la surface de prise 27 de la surface opposée 22 de la pièce de renfort 12 sont chauffées au moyen d'un souffle d'air chaud 28. Cette étape de chauffage a pour effet de ramollir la portion d'extrémité 26 et la surface de prise 27 de la surface opposée 22 de la pièce de renfort 12. Cela a également pour effet de provoquer une fusion superficielle de la matière thermoplastique de la portion d'extrémité et de la surface de prise 27.

Au cours d'une étape suivante, on déforme plastiquement la portion d'extrémité 26, vers la pièce 12, de manière à ce que la pièce 12 soit enserrée entre la face opposée 16 de la pièce 10 et la portion d'extrémité 26. Ainsi, la portion d'extrémité est en contact avec la surface de prise 27 de la surface opposée 22 de la pièce de renfort 12 qui a été chauffée par le souffle d'air chaud 28. Cette étape est représentée sur la figure 3.

Comme représenté sur la figure 3, le pliage de la portion d'extrémité 26 est mis en oeuvre au moyen d'un rouleau 30 formant moyen de déformation actionné par un robot 32, le rouleau se déplaçant sur la surface opposée 22 de la pièce de renfort 12, dans un plan sensiblement parallèle à la face 16 de la pièce 10. Lors de son déplacement, le rouleau peut, de manière optionnelle, appliquer un effort vertical de manière à presser la portion d'extrémité 26 contre la surface de prise de la pièce de renfort 12 et à provoquer un meilleur mélange des matières fusionnées à l'interface. On parle parfois de flaque de liaison.

Enfin, une dernière étape consiste à laisser refroidir l'ensemble des deux pièces solidarisées. A l'issue de cette étape de refroidissement, les deux pièces sont solidarisées du fait que la surface de prise 27 de la surface opposée 22 se trouve en prise avec la portion d'extrémité 26 de la protubérance 18, à la fois par la fusion de leurs matières thermoplastique à l'interface, et par la retenue mécanique du renfort 12 entre la portion d'extrémité 26 et la surface opposée 16 de la pièce de carrosserie 10. Cette retenue mécanique empêche une perte de contact entre les deux pièces 10 et 12.

L'invention ne se limite pas au mode de réalisation qui vient d'être décrit.

Selon une variante non représentée, le souffle d'air chaud 28 n'est orienté que vers la portion d'extrémité 26 ce qui présente l'avantage de ne pas risquer d'endommager la surface d'aspect 14 de la pièce 10. Lors de l'étape de pliage, la chaleur de la portion d'extrémité 26 est transmise par contact à la surface de prise 27 de la pièce 12 ce qui provoque une fusion superficielle de la matière en surface et permet un mélange des matières fusionnées.

Selon une autre variante représentée sur la figure 4, la pièce 12 ne comprend pas de lumière et sa surface de contact 20 est délimitée par un bord 34. Le bord 34 fait partie de la bordure de la pièce 12 qui délimite le contour externe de cette pièce. Lors de l'étape de mise en contact des deux pièces 10 et 12, le bord 34 de la pièce 12 est à proximité de la protubérance, de préférence en butée contre la base de la protubérance 18 de manière à assurer la mise en référence des deux pièces. Puis, la protubérance est pliée vers le bord 34 sur la surface de prise 27 de la pièce 12.

## Revendications

1. Procédé de solidarisation de première (10) et seconde (12) pièces en matière thermoplastique de véhicule automobile, **caractérisé en ce que**, la première pièce (10) comprenant une protubérance (18) en saillie d'une face (16) et la seconde pièce (12) comprenant une surface de prise (27), le procédé comprend les étapes suivantes :
- mise en contact de la seconde pièce (12) contre ladite face (16) de la première pièce (10), la seconde pièce (12) étant agencée de manière à ce que l'angle entre un vecteur normal à la face de la première pièce et un vecteur normal à la surface de prise (27) est aigu et à ce que la surface de prise est proche de la protubérance,
- chauffage de la protubérance (18),
- déformation plastique de la protubérance (18) vers la seconde pièce par action d'un moyen de déformation (30) se déplaçant sensiblement parallèlement à la face (16) de la première pièce (10), de manière à ce qu'au moins une portion d'extrémité (26) de la protubérance (18) soit en contact avec la surface de prise (27).

2. Procédé selon la revendication précédente, dans lequel l'angle entre les deux vecteurs est sensiblement nul.

3. Procédé selon l'une quelconque des revendications précédentes, comprenant une étape supplémentaire de pressage de la portion d'extrémité (26) contre la seconde pièce (12), de façon à provoquer une fusion superficielle des parties (26, 27) de la portion d'extrémité et de la surface de prise (27) en contact, et un mélange des matières fondues.

4. Procédé selon la revendication précédente, dans lequel la déformation plastique et le pressage de la portion d'extrémité (26) contre la seconde pièce (12) sont mis en oeuvre par le moyen de déformation.

5. Procédé selon la revendication précédente, dans lequel le moyen de déformation (30) est manoeuvré par un robot (32).

6. Procédé selon l'une quelconque des revendications précédentes, dans lequel le moyen de déformation comprend un rouleau, un presseur, un patin ou un bloc de métal, manoeuvré par un robot (32).

7. Procédé selon l'une quelconque des revendications précédentes, dans lequel on chauffe simultanément la portion d'extrémité (26) de la protubérance (18) et la surface de prise (27), notamment au moyen d'un souffle d'air chaud (28), d'un laser, ou d'un rayonnement infrarouge.

8. Procédé selon l'une quelconque des revendications précédentes, dans lequel la protubérance (18) est une languette ou une nervure, la protubérance étant de préférence sensiblement normale à la face (16) de la première pièce (10).

9. Procédé selon l'une quelconque des revendications précédentes, dans lequel la première pièce (10) est une pièce de carrosserie et la seconde pièce (12) est un renfort de la pièce de carrosserie ou un support de capteur.

10. Procédé selon l'une quelconque des revendications précédentes, dans lequel la seconde pièce (12) comprenant un orifice traversant (24) débouchant sur la surface de prise (27), lors de l'étape de mise en contact, la protubérance pénètre dans l'orifice (24) en faisant dépasser la portion d'extrémité (26).

## Claims

1. Method of fastening first (10) and second (12) thermoplastic parts of a motor vehicle, **characterised in that** the first part (10) has a protuberance (18) projecting from one side (16) and the second part (12) has an engagement surface (27), the method comprising the following steps:
- bringing the second part (12) into contact with said side (16) of the first part (10), the second part (12) being designed so that the angle between a vector normal to the side of the first part and a vector normal to the engagement surface (27) is small and so that the engagement surface is close to the protuberance,
- heating the protuberance (18),
- plastically deforming the protuberance (18) towards the second part using a deformation means (30) moving substantially parallel to the side (16) of the first part (10), so that at least one end portion (26) of the protuberance (18) is in contact with the engagement surface (27).

2. Method according to the previous claim, wherein the angle between the two vectors is substantially zero.

3. Method according to any of the previous claims, comprising an additional step of pressing the end portion (26) against the second part (12), to cause surface fusion of the parts (26, 27) of the end portion and the engagement surface (27) in contact, and mix the melted materials.

4. Method according to the previous claim, wherein plastic deformation and pressing of the end portion (26) against the second part (12) are implemented by the deformation means.

5. Method according to the previous claim, wherein the deformation means (30) is operated by a robot (32).

6. Method according to any of the previous claims, wherein the deformation means comprises a roller, a presser, a pad or a metal block, operated by a robot (32).

7. Method according to any of the previous claims, wherein the end portion (26) of the protuberance (18) and the engagement surface (27) are heated simultaneously, in particular using a blast of hot air (28), a laser or infrared radiation.

8. Method according to any of the previous claims, wherein the protuberance (18) is a tongue or rib, the protuberance preferably being substantially normal to the side (16) of the first part (10).

9. Method according to any of the previous claims, wherein the first part (10) is a bodywork part and the second part (12) is a reinforcement of the bodywork part or a sensor support.

10. Method according to any of the previous claims, wherein the second part (12) comprising a through hole (24) opening onto the engagement surface (27), during the step of bringing into contact, the protuberance goes through the hole (24), with its end portion (26) sticking out.

## Patentansprüche

1. Verfahren zur Fixierung eines ersten (10) und zweiten (12) Teils aus Thermoplastmaterial für Kraftfahrzeug, **dadurch gekennzeichnet, dass** das erste Teil (10) einen Vorsprung (18) von einer Fläche (16) vorstehend aufweist und das zweite Teil (12) eine Aufnahmefläche (27) aufweist, wobei das Verfahren die folgenden Schritte aufweist:
- Inkontaktbringen des zweitens Teils (12) gegen die Fläche (16) des ersten Teils (10), wobei das zweite Teil (12) derart eingerichtet ist, dass der Winkel zwischen einem zu der Fläche des ersten Teils senkrechten Vektors und einem zu der Aufnahmefläche (27) senkrechten Vektor spitz ist und dass die Aufnahmefläche in der Nähe des Vorsprungs ist,
- Heizen des Vorsprungs (18),
- plastisches Verformen des Vorsprungs (18) zu dem zweiten Teil durch Einwirkung eines Verformungsmittels (30), das sich im Wesentlichen parallel zu der Fläche (16) des ersten Teils (10) bewegt, derart, dass mindestens ein Endbereich (26) des Vorsprungs (18) mit der Aufnahmefläche (27) in Berührung ist.

2. Verfahren nach dem vorhergehenden Anspruch, bei dem der Winkel zwischen den zwei Vektoren im Wesentlichen gleich null ist.

3. Verfahren nach einem der vorhergehenden Ansprüche, das einen zusätzlichen Schritt des Drückens des Endbereichs (26) gegen das zweite Teil (12) derart aufweist, dass ein oberflächliches Schmelzen von Teilen (26, 27) des Endbereichs und der Aufnahmefläche (27) im Kontakt und ein Mischen der geschmolzenen Materialien veranlasst werden.

4. Verfahren nach dem vorhergehenden Anspruch, bei dem die plastische Verformung und das Drücken des Endbereichs (26) gegen das zweite Teil (12) durch das Verformungsmittel umgesetzt werden.

5. Verfahren nach dem vorhergehenden Anspruch, bei dem das Verformungsmittel (30) von einem Roboter (32) bewegt wird.

6. Verfahren nach einem der vorhergehenden Ansprüche, bei dem das Verformungsmittel eine Rolle, einen Drücker, eine Kufe oder einen Metallblock, der von einem Roboter (13) bewegt wird, aufweist.

7. Verfahren nach einem der vorhergehenden Ansprüche, bei dem man gleichzeitig den Endbereich (26) des Vorsprungs (18) und die Aufnahmefläche (27), insbesondere mittels eines Warmluftstrahls (28), eines Lasers oder einer Infrarotstrahlung, erhitzt.

8. Verfahren nach einem der vorhergehenden Ansprüche, bei dem der Vorsprung (18) eine Zunge oder eine Rippe ist, wobei der Vorsprung vorzugsweise im Wesentlichen zu der Fläche (16) des ersten Teils (10) senkrecht steht.

9. Verfahren nach einem der vorhergehenden Ansprüche, bei dem das erste Teil (10) ein Karosserieteil und das zweite Teil (12) eine Verstärkung des Karosserieteils oder ein Sensorhalter ist.

10. Verfahren nach einem der vorhergehenden Ansprüche, bei dem das zweite Teil (12) eine durchgehende Öffnung (24) aufweist, die an der Aufnahmefläche (27) mündet, wobei, bei dem Schritt des Inkontaktbringens, der Vorsprung in die Öffnung (24) eindringt, indem er den Endabschnitt (26) vorstehen lässt.
